# EUROPÄISCHE PATENTANMELDUNG

(11) **EP 3 031 839 A1**
(43) Veröffentlichungstag der Anmeldung: **15.06.2016**
(21) Anmeldenummer: 14197281.0
(22) Anmeldetag: 11.12.2014
(51) Int. Cl.: C08G 18/20, C08G 18/40, B32B 27/40, C08G 18/48, C08G 18/76, C08G 18/42, C09J 175/04, D06M 15/564, D06M 17/10

(54) **Atmungsaktiver Polyurethan-Heissschmelzkleber**

(71) Anmelder: Sika Technology AG, 6340 Baar (CH)
(72) Erfinder: Paschkowski, Kai, 21635 Jork (DE); Janke, Doreen, 25486 Alveslohe (DE); Arlt, Claudia, 22527 Hamburg (DE)
(74) Vertreter: Sika Patent Attorneys

(57) **Zusammenfassung**

Beschrieben wird ein Heissschmelzklebstoff, umfassend ein Polyurethan-Polymer erhältlich aus der Umsetzung von a) Polyolen umfassend a1) mindestens ein flüssiges Polyesterpolyol, a2) mindestens ein amorphes Polyesterpolyol, a3) mindestens ein kristallines Polyesterpolyol und a4) mindestens ein Polypropylenglycol und b) mindestens einem Polyisocyanat, und c) mindestens einen Katalysator, wobei die Ausgangskomponenten des Heissschmelzklebstoffs in bestimmten Gewichtsanteilen eingesetzt werden, wobei die Polyole und das mindestens eine Polyisocyanat in einem solchen Mengenverhältnis vorliegen, dass das NCO/OH-Verhältnis im Bereich von 2,1/1 bis 3/1 liegt.

Der Heissschmelzklebstoff eignet sich insbesondere als Textilklebstoff zum Verkleben von permeablen Membranen bei der Herstellung von atmungsaktiven Textilien.

## Beschreibung

### Technisches Gebiet

Die Erfindung betrifft das Gebiet der Heissschmelzklebstoffe und deren Verwendung als Textilklebstoffe, die zur Kaschierung in atmungsaktiven Textilien eingesetzt werden können.

### Stand der Technik

Reaktive Polyurethan-Zusammensetzungen, die sich als Heissschmelzklebstoffe - auch Hotmelts genannt - einsetzen lassen, sind bekannt (PUR-RHM). Sie bestehen meist aus Isocyanat-terminierten Polyurethan-Prepolymeren, die durch Umsetzung geeigneter Polyole mit einem Überschuss an Diisocyanaten erhalten werden. Solche Klebstoffe bauen unmittelbar nach ihrer Applikation durch Abkühlen eine hohe Anfangshaftfestigkeit auf und erhalten ihre Endeigenschaften, insbesondere Wärmestandfestigkeit und Beständigkeit gegenüber Umwelteinflüssen, durch die allmählich ablaufende "Aushärtung", d.h. die chemische Reaktion der Isocyanatgruppen mit Luftfeuchtigkeit.

Heissschmelzklebstoffe werden u.a. als Textilklebstoffe für Textilkaschierungen verwendet. Die Applikation von Textilklebstoffen erfolgt z.B. über Walzenanlagen wie Screenprint- und Meltprintanlagen und einer Breitschlitzdüse z.B. auf dünne Polyurethan-Membranen, PTFE-Membranen, hitzeempfindliche Membranen oder PES-Membranen. Appliziert werden meist nur geringe Menge (< 10g/m²). Ein entscheidender Unterschied zwischen Textil-PUR-Heissschmelzklebstoffen und anderen reaktiven PUR-Heissschmelzklebstoffen ist, dass die Applikationstemperatur bei Textilanwendungen möglichst gering sein sollte.

Bei Textilanwendungen wird ferner ein "Soft Touch" benötigt, d.h. der Klebstoff darf nicht spürbar sein.

Es ist bekannt, dass mit erhöhter Applikationsviskosität auch eine verbesserte Anfangsfestigkeit der Verklebung zu erhalten ist. Senkt man die Viskosität, wird die Kohäsion im Allgemeinen verschlechtert. Jedoch belasten hohe Applikationstemperaturen neben dem Klebstoff auch die Substrate, deshalb werden bevorzugt Textilklebstoffe mit geringer Applikationsviskosität bei hitzeempfindlichen Substraten verwendet.

Daher ist der Stand der Technik für Textilverklebungen niedrigviskose Polyurethanklebstoffe zu verwenden. Diese sind selbst bei Raumtemperatur weich und flexibel genug und besitzen einen sehr niedrigen Schmelzpunkt, was die Applikation auf hitzeempfindliche Substrate ermöglicht.

Für Textil-PUR-Heissschmelzklebstoffe werden eher amorphe Rohstoffe eingesetzt, da diese für eine lange offene Zeit und den "soft"-Charakter sorgen.

Bekannte Formulierungen von Textilklebstoffen weisen aber auch einige Nachteile auf. So kann der Einsatz von eher amorphen Rohstoffen für Textil-PUR- Heissschmelzklebstoffe auch einen Nachteil darstellen, da eine lange offene Zeit nicht immer wünschenswert ist.

Ein weiteres Problem ist die geringe Viskosität, die zwar gefordert wird, aber meist auch eine geringe Anfangsfestigkeit mit sich bringt. So kann die Applikation an Walzenanlagen aufgrund der vielen Auf- und Ab-Bewegungen zu Delaminationen des Verbundes führen. Unter geringer Viskosität wird hier eine Viskosität im Bereich von 10000 mPa*s bis 15000 mPa*s bei 70°C verstanden.

Einige Textilklebstoffe zeigen trotz höherer Viskosität (z.B. 20000 mPa*s bei 70°C) eine geringe Anfangsfestigkeit. Da über die Standardmethode zur Bestimmung der Anfangsfestigkeit nur sehr kleine Werte erhalten werden, ist die Feststellung von Unterschieden zwischen den unterschiedlichen Typen schwierig. Daher wurde eine empfindlichere und anwendungsnahe Methode zur Bestimmung der Anfangsfestigkeit entwickelt, der sogenannte "Peel-Test", bei dem 2 PET-Folien verklebt werden. Einzelheiten hierzu sind im experimentellen Teil angegeben.

Atmungsaktive Textilien sind zwar wasserundurchlässig, aber durchlässig für Wasserdampf. Die Wasserdampfdurchlässigkeit kann in g/m² pro 24h gemessen werden. Hierfür werden in der Regel atmungsaktive Membranen eingesetzt, bei denen es sich um permeable Membranen handelt, die wasserdampfdurchlässig sind.

Als atmungsaktive Membranen werden verschiedene Typen verwendet. Ein Typ von Membranen weist z.B. mikroskopisch kleine Poren auf, z.B. Gore-Tex^{®} auf Basis einer PTFE-Folie mit mikroskopisch kleinen Poren. Ein anderer Membrantyp, z.B. Sympatex®, ist makroskopisch geschlossen, es kann aber Wasserdampf hindurchtreten, da funktionelle Gruppen im Kunststoff der Membran den Wasserdampfaustausch ermöglichen.

Die Applikation von Textil-PUR-Heissschmelzklebstoffen auf atmungsaktive Membranen erfolgt meist durch Screenprintanlagen als Punktlamination auf der Membran, ein weiteres, damit zu verklebendes Substrat wird anschließend zugeführt. Nach dem Stand der Technik werden gewöhnlich etwa 50 bis 60% der Membranoberfläche mit Klebstoff bedeckt, damit die Membran atmungsaktiv bleibt.

### Darstellung der Erfindung

Die Aufgabe der Erfindung bestand in der Bereitstellung eines Heissschmelzklebstoffs, der die vorstehend beschriebenen Nachteile nach dem Stand der Technik überwindet und als Textilklebstoff geeignet ist. Insbesondere sollte ein Heissschmelzklebstoff bereitgestellt werden, der sich durch eine erhöhte Atmungsaktivität auszeichnet. Zudem sollte der Heissschmelzklebstoff eine relativ niedrige Applikationsviskosität aufweisen und dennoch eine gute Anfangsfestigkeit zeigen.

Ferner sollte der Klebstoff "soft touch"-Eigenschaften aufweisen und auch hydrolysestabil sein.

Die Aufgabe konnte überraschenderweise durch den Heissschmelzklebstoff wie in Anspruch 1 definiert gelöst werden.

Der erfindungsgemäße Heissschmelzklebstoff ist überraschenderweise atmungsaktiv. Dadurch kann bei der Textilkaschierung die atmungsaktive bzw. permeable Membran unterstützt werden bzw. die Membran wird durch den atmungsaktiven Klebstoff weniger eingeschränkt. Durch den erfindungsgemäßen Klebstoff kann die Wasserdampfdurchlässigkeit gefördert werden.

Der erfindungsgemäße Klebstoff zeigt eine geringe Applikationsviskosität im Vergleich zu einem herkömmlichen Klebstoff und zeigt dennoch die gleiche Ablaufweite im Peel Test (Anfangsfestigkeit). Somit konnte ein anwendungsfreundlicher und substratschonender Klebstoff bereitgestellt werden, dessen Kohäsion durch das Absenken der Viskosität nicht verschlechtert wird.

Im Allgemeinen ist mit dem erfindungsgemäßen Heissschmelzklebstoff eine Verarbeitung bei geringen Temperaturen möglich, da er eine geringe Applikationsviskosität aufweist. Er zeigt kurze Durchhärtungzeiten und somit kurze Lagerungszeiten. Der Klebstoff besitzt einen "soft touch". Dadurch ist er zwischen den Textilien nicht zu spüren. Das Textil ist in seiner Bewegung nicht eingeschränkt. Der erfindungsgemäße Klebstoff ist wasch- und hydrolysestabil und zeigt trotz der geringen Applikationstemperatur eine gewisse Anfangsfestigkeit, die eine Delamination kurz nach der Applikation verhindert.

Weitere Aspekte der Erfindung sind die Verwendung des Heissschmelzklebstoffs als Textilklebstoff und atmungsaktive Textilien, in denen der Heissschmelzklebstoff zur Kaschierung verwendet wird, die jeweils Gegenstand weiterer unabhängiger Ansprüche sind. Besonders bevorzugte Ausführungsformen der Erfindung sind Gegenstand der abhängigen Ansprüche.

### Weg zur Ausführung der Erfindung

Mit "Poly" beginnende Substanznamen wie beispielsweise Polyol oder Polyisocyanat bezeichnen im vorliegenden Dokument Substanzen, die formal zwei oder mehr der in ihrem Namen vorkommenden funktionellen Gruppen pro Molekül enthalten. Beispielsweise weisen Polyole mindestens 2 Hydroxylgruppen auf. Polyisocyanate weisen mindestens 2 Isocyanatgruppen auf.

Die Einteilung in flüssige, amorphe und kristalline Polyesterpolyole ist üblich und dem Fachmann bekannt. Entsprechende Produkte sind im Handel erhältlich.

Die flüssigen Polyesterpolyole sind bei Raumtemperatur (20°C) flüssig und weisen eine Glasübergangstemperatur von unter 20°C, bevorzugt unter 0°C, auf. Die flüssigen Polyesterpolyole besitzen keinen Schmelzpunkt. Die amorphen Polyesterpolyole besitzen keinen Schmelzpunkt und weisen eine Glasübergangstemperatur von mindestens 20°C auf. Die kristallinen Polyesterpolyole besitzen einen Schmelzpunkt, wobei der Schmelzpunkt bevorzugt mindestens 5°C, bevorzugter mindestens 10°C, beträgt. Die flüssigen Polyesterpolyole sind bevorzugt lineare Polyesterpolyole. Die amorphen Polyesterpolyole sind ebenfalls bevorzugt lineare Polyesterpolyole.

Die Glasübergangstemperatur (Tg) und der Schmelzpunkt (Smp) können gemäß DIN 53765 bestimmt werden.

Die Erfindung betrifft einen Heissschmelzklebstoff, umfassend
ein isocyanatfunktionelles Polyurethan-Polymer erhältlich aus der Umsetzung von a) Polyolen umfassend a1) mindestens ein flüssiges Polyesterpolyol, a2) mindestens ein amorphes Polyesterpolyol, a3) mindestens ein kristallines Polyesterpolyol und a4) mindestens ein Polypropylenglycol und b) mindestens einem Polyisocyanat, und
c) mindestens einen Katalysator,
   wobei die Ausgangskomponenten des Heissschmelzklebstoffs, bezogen auf das Gesamtgewicht aller Ausgangskomponenten,
a1) 6 bis 30 Gew.-% des mindestens einen flüssigen Polyesterpolyols,
a2) 3 bis 17 Gew.-% des mindestens eines amorphen Polyesterpolyols,
a3) 6 bis 30 Gew.-% des mindestens einen kristallinen Polyesterpolyols,
a4) 10 bis 30 Gew.-% des mindestens einen Polypropylenglycols,
b) 25 bis 50 Gew.-% des mindestens einen Polyisocyanats und
c) 0,04 bis 0,2 Gew.-% des mindestens einen Katalysators
umfassen, wobei die Polyole und das mindestens eine Polyisocyanat in einem solchen Mengenverhältnis vorliegen, dass das molare Verhältnis von NCO-Gruppen zu OH-Gruppen (NCO/OH-Verhältnis) im Bereich von 2,1/1 bis 3/1 liegt.

Die Mengenanteile in Gew.-% beziehen sich hier, soweit nicht anders angegeben, auf das Gesamtgewicht aller Ausgangskomponenten, die für den Heissschmelzklebstoff eingesetzt werden. Die Mengenanteile entsprechen in der Regel auch den Mengenanteilen im Heissschmelzklebstoff, wobei es sich von selbst versteht, dass die Polyole und das oder die Polyisocyanate, die als Ausgangskomponenten eingesetzt werden, in dem Heissschmelzklebstoff vollständig oder zumindest größtenteils in Form des Umsetzungsprodukts, d.h. des isocyanatfunktionellen Polyurethan-Polymers, vorliegen.

Als Ausgangskomponenten für das isocyanatfunktionelle Polyurethan-Polymer werden a) Polyole umfassend a1) mindestens ein flüssiges Polyesterpolyol, a2) mindestens ein amorphes Polyesterpolyol, a3) mindestens ein kristallines Polyesterpolyol und a4) mindestens ein Polypropylenglycol mit b) mindestens einem Polyisocyanat umgesetzt.

Es können jeweils unabhängig voneinander ein oder mehrere flüssige, ein oder mehrere amorphe und ein oder mehrere kristalline Polyesterpolyole eingesetzt werden. Die flüssigen, amorphen und kristallinen Polyesterpolyole sind im Handel erhältlich oder können auf übliche Weise hergestellt werden, z.B. aus aliphatischen Hydroxycarbonsäuren oder aus aliphatischen und/oder aromatischen Dicarbonsäuren und einem oder mehreren Diolen. Es können auch Derivate eingesetzt werden, wie z. B. Lactone, Ester von niederen Alkoholen oder Anhydride. Die flüssigen, amorphen und kristallinen Polyesterpolyole sind vorzugsweise Polyesterdiole.

Beispiele für geeignete Ausgangsprodukte sind als Säurekomponente Bernsteinsäure, Adipinsäure, Korksäure, Azelainsäure, Sebazinsäure, Dodecandisäure, Glutarsäure, Glutarsäureanhydrid, Phthalsäure, Isophthalsäure, Terephthalsäure und/oder Phthalsäureanhydrid und als Alkoholkomponente Ethylenglycol, Diethylenglycol, 1,4-Butandiol, 1,6-Hexandiol und/oder Neopentylglycol, sowie ε-Caprolacton als Beispiel für eine Hydroxycarbonsäure.

Kristalline Polyesterpolyole sind z.B. erhältlich aus der Umsetzung einer oder mehrerer linearer aliphatischer Dicarbonsäuren mit mindestens 2 Kohlenstoffatomen, bevorzugt mindestens 6 Kohlenstoffatomen, besonders bevorzugt 6 bis 14 Kohlenstoffatomen, wie Adipinsäure, Azelainsäure, Sebacinsäure oder Dodecandisäure, mit einem oder mehreren linearen Diolen mit mindestens 2 Kohlenstoffatomen, bevorzugt mindestens 4 Kohlenstoffatomen, besonders bevorzugt 4 bis 6 Kohlenstoffatomen, wie z.B. 1,4-Butandiol und 1,6-Hexandiol. Geeignet sind auch Polycaprolacton oder dessen Derivate.

Amorphe Polyesterpolyole sind z.B. erhältlich aus der Umsetzung von einer oder mehreren Carbonsäurekomponenten ausgewählt aus Adipinsäure, Isophthalsäure und Terephthalsäure mit einer oder mehreren Alkoholkomponenten ausgewählt aus Ethylenglycol, Neopentylglycol und 3-Hydroxy-2,2-dimethylpropyl-3-hydroxy-2,2-dimethylpropanoat.

Flüssige Polyesterpolyole sind z.B. erhältlich aus der Umsetzung von Adipinsäure mit einer oder mehreren Alkoholkomponenten ausgewählt aus Ethylenglycol, 1,6-Hexandiol und Neopentylglycol.

Die Ausgangskomponenten des Heissschmelzklebstoffs umfassen a1) 6 bis 30 Gew.-%, bevorzugt 10 bis 20 Gew.-%, mindestens eines flüssigen Polyesterpolyols. Die Ausgangskomponenten des Heissschmelzklebstoffs umfassen a2) 3 bis 17 Gew.-%, bevorzugt 6 bis 12 Gew.-%, mindestens eines amorphen Polyesterpolyols. Die Ausgangskomponenten des Heissschmelzklebstoffs umfassen a3) 6 bis 30 Gew.-%, bevorzugt 10 bis 20 Gew.-% mindestens eines kristallinen Polyesterpolyols.

Die flüssigen, amorphen und kristallinen Polyesterpolyole bilden die Basis des Heissschmelzklebstoffs, der bevorzugt ein Textilklebstoff ist, und beeinflussen dessen allgemeinen Eigenschaften wie Viskosität, offene Zeit und Anfangsfestigkeit.

Es können ein oder mehrere Polypropylenglycole eingesetzt werden. Polypropylenglycole sind im Handel erhältlich. Es handelt sich insbesondere um lineare Polyether mit zwei Hydroxylgruppen. Das Polypropylenglycol weist bevorzugt ein Gewichtsmittel des Molekulargewichts von nicht mehr als 1000 g/mol auf. Das Polypropylenglycol weist bevorzugter ein Gewichtsmittel des Molekulargewichts im Bereich von 200g/mol bis 1000 g/mol, bevorzugter 300g/mol bis 600g/mol auf. Das Gewichtsmittel des Molekulargewichts kann bestimmt werden durch GPC (Gel-Permeations-Chromatographie)

Die Ausgangskomponenten des Heissschmelzklebstoffs umfassen a4) 10 bis 30 Gew.-%, bevorzugt 16 bis 25 Gew.-%, mindestens eines Polypropylenglycols, insbesondere eines Polypropylenglycols mit einem Gewichtsmittel des Molekulargewichts von nicht mehr als 1000 g/mol. Das Polypropylenglycol unterstützt die Atmungsaktivität.

Es können ein oder mehrere Polyisocyanate eingesetzt werden. Das Polyisocyanat ist bevorzugt eine monomeres Polyisocyanat. Bevorzugte Polyisocyanate weisen 2 oder 3 Isocyanatgruppen auf, wobei Polyisocyanate mit 2 Isocyanatgruppen besonders bevorzugt sind.

Beispiele für monomere Polyisocyanate, bevorzugt monomere Diisocyanate, sind 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI) und Gemische dieser Isomeren, 1,10-Decamethylendiisocyanat, 1,12-Dodecamethylendiisocyanat, Lysin- und Lysinesterdiisocyanat, Cyclohexan-1,3- und -1,4-diisocyanat und Gemische dieser Isomeren, 1-Methyl-2,4- und - 2,6-diisocyanatocyclohexan und Gemische dieser Isomeren (HTDI oder H₆TDI), 1-Isocyanato-3,3,5-trimethyl-5-isocyanatomethyl-cyclohexan (= Isopho-rondiisocyanat oder IPDI), Perhydro-2,4'- und -4,4'-diphenylmethandiisocyanat (HMDI oder H₁₂MDI) und Gemische dieser Isomeren, 1,4- Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI) und Gemische dieser Isomeren, m- und p- Tetramethyl-1,3- und -1,4-xylylendiisocyanat (m- und p-TMXDI) und Gemische dieser Isomeren, Bis-(1-isocyanato-1-methylethyl)-naphthalin, 2,4-und 2,6-Toluylendiisocyanat und Gemische dieser Isomeren (TDI), 4,4'-, 2,4'-und 2,2'-Diphenylmethandiisocyanat und Gemische dieser Isomeren (MDI), 1,3- und 1,4-Phenylendiisocyanat und Gemische dieser Isomeren, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), sowie Mischungen der vorgenannten Isocyanate. Für das Formulieren von lichtstabilen Zusammensetzungen werden bevorzugt aliphatische und cycloaliphatische Polyisocyanate eingesetzt.

Bevorzugt sind MDI, TDI, HDI und IPDI. Besonders bevorzugt sind IPDI und insbesondere MDI, insbesondere 4,4'-Diphenylmethandiisocyanat (4,4'-MDI). Das monomere Polyisocyanat, bevorzugt das monomere Diisocyanat, weist vorzugsweise ein Molekulargewicht von nicht mehr als 500 g/mol, bevorzugter nicht mehr als 400 g/mol auf.

Die Ausgangskomponenten des Heissschmelzklebstoffs umfassen b) 25 bis 50 Gew.-%, bevorzugt 30 bis 40 Gew.-%, mindestens eines Polyisocyanats, insbesondere MDI. Das Polyisocyanat bildet die reaktive Komponente.

Die Polyole und das mindestens eine Polyisocyanat werden in einem solchen Mengenverhältnis eingesetzt, dass das molare Verhältnis von NCO-Gruppen zu OH-Gruppen (NCO/OH-Verhältnis) im Bereich von 2,1/1 bis 3/1, bevorzugt 2,15/1 bis 2,7/1 und besonders bevorzugt von größer 2,2/1 bis 2,5/1 oder größer 2,2/1 bis 2,4/1, liegt. Besonders bevorzugt liegt das NCO/OH-Verhältnis im Bereich von 2,25/1 bis 2,5/1 oder 2,25/1 bis 2,4/1.

Durch die Umsetzung der Polyole mit dem mindestens einen Polyisocyanat wird ein isocyanatfunktionelles Polyurethan-Polymer erhalten, d.h. ein Polyurethan-Polymer, das Isocyanatgruppen aufweist. Das isocyanatfunktionelle Polyurethan-Polymer ist ein feuchtigkeitshärtbares Polyurethan-Polymer, d.h. es können bei Anwesenheit von Wasser, insbesondere Luftfeuchtigkeit, Vernetzungs- bzw. Härtungsreaktionen über die Isocyanatgruppen stattfinden. Der Heissschmelzklebstoff ist daher ein feuchtigkeitshärtbarer oder reaktiver Heissschmelzklebstoff. Bei Feuchtigkeitsausschluss ist der Heissschmelzklebstoff lagerstabil.

Die Ausgangskomponenten des Heissschmelzklebstoffs bzw. der Heissschmelzklebstoff enthalten einen oder mehrere Katalysatoren. Der Katalysator ist insbesondere ein Katalysator zur Beschleunigung der Vernetzung bzw. Härtung des isocyanatfunktionellen Polyurethan-Polymers bzw. des Heissschmelzklebstoffs, die bei Gebrauch des Heissschmelzklebstoffs stattfindet.

Solche Katalysatoren sind dem Fachmann bestens bekannt und er kann sie aus den dafür üblichen Katalysatoren auswählen. Beispiele für Katalysatoren sind Titanate, Organozinnverbindungen, Bismutverbindungen, z.B. mit organischen Liganden und/oder Komplexliganden, und Amine, wobei Amine bevorzugt sind.

Der Katalysator ist bevorzugt ein tertiäres Amin, insbesondere eines mit cyclischer Struktur, wobei das Amin gegebenenfalls zusätzliche, mit Isocyanat reaktive Gruppen, insbesondere Hydroxyl- und/oder Aminogruppen, aufweisen kann. Beispiele sind Dimethylmonoethanolamin, Diethylmonoethanolamin, Diethanolmethylamin, Diethanolcyclohexylamin, Diazabicyclooctan (DABCO), Dimethylbenzylamin (Desmorapid DB, BAYER), Bisdimethylaminoethylether (Calalyst A 1, UCC), N,N-Dimethylpiperazin, N-(2-Hydroxyethoxyethyl)-2-azanorbornan, Diazabicycloundecen (DBU), Texacat DP-914 (Texaco Chemical) oder N,N,N,N-Tetramethylbutan-1,3-diamin.

Ganz besonders bevorzugte Katalysatoren sind Morpholin-Derivate, d.h. Verbindungen die mindestens eine substituierte oder unsubstitierte Morpholinyl- bzw. Morpholinogruppe enthalten, wie z.B. Bis(2-(2,6-dimethyl-4-morpholino)ethyl)-(2-(4-morpholino)ethyl)amin, Tris(2-(4- morpholino)-ethyl)amin, Tris(2-(4-morpholino)propyl)amin, Tris(2-(2,6-dimethyl-4-morpholino)ethyl)amin, Tris(2-(2,6-diethyl-4- morpholino)ethyl)amin, Tris(2-(2-methyl-4-morpholino)ethyl)amin, Tris(2-(2- ethyl-4-morpholino)ethyl)amin, Dimethylaminopropylmorpholin, Bis-(morpholinopropyl)methylamin, Diethylaminopropylmorpholin, Bis-(morpholinopropyl)-ethylamin, Bis-(morpholinopropyl)-propylamin, Morpholinopropylpyrrolidon, N-Morpholino-propyl-N'-methyl-piperazin, Dimorpholinodiethylether bzw. Dimorpholinyldiethylether (DMDEE) und Di-2,6-dimethylmorpholinoethyl)ether, wobei DMDEE besonders bevorzugt ist.

Die Ausgangskomponenten des Heissschmelzklebstoffs oder der Heissschmelzklebstoff umfassen bzw. umfasst c) 0,04 bis 0,2 Gew.-%, bevorzugt 0,06 bis 0,13 Gew.-%, mindestens eines Katalysators, insbesondere ein Morpholin-Derivat, insbesondere DMDEE. Der Katalysator unterstützt die Atmungsaktivität und beschleunigt die Durchhärtung.

Die Ausgangskomponenten des Heissschmelzklebstoffs bzw. der Heissschmelzklebstoff können gegebenenfalls einen oder mehrere Füllstoffe, bevorzugt pyrogene Kieselsäure, enthalten, vorzugsweise in einer Menge von nicht mehr als 2 Gew.-%, bevorzugter nicht mehr als 1 Gew.-%. Der Einsatz eines oder mehrere Füllstoffe, bevorzugt pyrogene Kieselsäure, ist bevorzugt, wobei der Anteil, bezogen auf die Ausgangskomponenten, bevorzugt mindestens 0,4 Gew.-% beträgt.

Beispiele für geeignete Füllstoffe sind Kieselsäuren, bevorzugt pyrogene Kieselsäuren, Talk, Calciumcarbonate, Tone, Ruß und Titandioxid, wobei pyrogene Kieselsäuren besonders vorteilhaft sind, z.B. die Aerosil^{®}-Typen von Evonik Industries.

Die Ausgangskomponenten des Heissschmelzklebstoffs oder der Heissschmelzklebstoff umfassen somit bevorzugt d) 0 bis 2 Gew.-%, insbesondere 0,4 bis 2 Gew.-%, bevorzugt 0 bis 1 Gew.-%, insbesondere 0,4 bis 1 Gew.-%, mindestens eines Füllstoffs, insbesondere pyrogene Kieselsäure. Der Füllstoff kann die Atmungsaktivität unterstützen.

Als Ausgangskomponenten können gegebenenfalls noch ein oder mehrere weitere Additive eingesetzt werden, die für Heissschmelzklebstoffe üblich sind. Beispiele sind Stabilisatoren, Pigmente, Harze, Thermoplaste. Die Gesamtmenge an solchen zusätzlichen Additiven, falls eingesetzt, beträgt vorzugweise nicht mehr als 10 Gew.-%, bevorzugter nicht mehr als 5 Gew.-%, bezogen auf alle Ausgangskomponenten.

Die Ausgangskomponenten des Heissschmelzklebstoffs, bezogen auf das Gesamtgewicht aller Ausgangskomponenten, umfassen oder bestehen aus
a1) 6 bis 30 Gew.-%, bevorzugt 10 bis 20 Gew.-%, insbesondere etwa 17 Gew.-%, mindestens eines flüssigen Polyesterpolyols,
a2) 3 bis 17 Gew.-%, bevorzugt 6 bis 12 Gew.-%, insbesondere etwa 9 Gew.-%, mindestens eines amorphen Polyesterpolyols,
a3) 6 bis 30 Gew.-%, bevorzugt 10 bis 20 Gew.-%, insbesondere etwa 18 Gew.-%, mindestens eines kristallinen Polyesterpolyols,
a4) 10 bis 30 Gew.-%, bevorzugt 16 bis 25 Gew.-%, insbesondere etwa 20 Gew.-%, mindestens eines Polypropylenglycols, insbesondere eines Polypropylenglycols mit einem Gewichtsmittel des Molekulargewichts von nicht mehr als 1000 g/mol,
b) 25 bis 50 Gew.-%, bevorzugt 30 bis 40 Gew.-%, insbesondere etwa 36 Gew.-%, mindestens eines Polyisocyanats, insbesondere MDI,
c) 0,04 bis 0,2 Gew.-%, bevorzugt 0,06 bis 0,13 Gew.-%, insbesondere etwa 0,10 bis 0,11 Gew.-%, mindestens eines Katalysators, insbesondere ein Morpholin-Derivat, insbesondere DMDEE,
d) 0 bis 2 Gew.-%, insbesondere 0,4 bis 2 Gew.-%, bevorzugt 0 bis 1 Gew.-%, insbesondere 0,4 bis 1 Gew.-%, bevorzugt etwa 0,6 Gew.-% mindestens eines Füllstoffs, bevorzugt pyrogene Kieselsäure,
   umfassen, sowie gegebenenfalls
e) 0 bis 10 Gew.-%, bevorzugt 0 bis 5 Gew.-%, eines oder mehrere Additive.

Der Heissschmelzklebstoff kann durch ein Verfahren umfassend die Umsetzung der Polyole mit dem mindestens einen Polyisocyanat unter Erwärmen erhalten werden. Diese Umsetzung ist dem Fachmann bestens vertraut und er kann die dafür geeigneten Parameter ohne weiteres auswählen. Typischerweise erfolgt die Umsetzung bei Temperaturen von z.B. mindestens 80 °C, bevorzugt im Bereich von 100 °C bis 160 °C. Die Reaktionsdauer kann z.B. in einem Zeitraum von 1 bis 6 h liegen. Ein Katalysator ist für die Umsetzung in der Regel nicht erforderlich. Der insbesondere für die spätere Vernetzung bzw. Härtung des gebildeten isocyanatfunktionellen Polyurethan-Polymers eingesetzte Katalysator kann z.B. während der Umsetzung, z.B. in einem fortgeschrittenen Stadium der Umsetzung, oder nach der Umsetzung zugegeben werden.

Der Katalysator und die optionalen Komponenten, wie der Füllstoff, insbesondere pyrogene Kieselsäure, und gegebenenfalls ein oder mehrere weitere Additive können unabhängig voneinander vor, während und/oder nach der Umsetzung der Polyole mit dem mindestens einen Polyisocyanat zugesetzt werden. In der Regel stören diese Komponenten die Umsetzung nicht, so dass sie bereits vor oder während der Umsetzung zugegeben werden können, um eine homogene Mischung zu erhalten.

Der erhaltene Heissschmelzklebstoff kann, gegebenenfalls durch Filter, abgefüllt werden, z.B. in Tuben oder Kartuschen, und luftdicht gelagert werden. Der Heissschmelzklebstoff ist auf diese Weise lagerstabil und kann auf übliche Weise eingesetzt werden.

Der erfindungsgemässe Heissschmelzklebstoff eignet sich insbesondere als Textilklebstoff, insbesondere zum Verkleben von permeablen Membranen, die bevorzugt wasserdampfdurchlässig sind.

Die Applikation des Heissschmelzklebstoffs kann z.B. wie üblich über Walzenanlagen, wie Screenprint- und Meltprintanlagen, und einer Breitschlitzdüse auf das zu verklebende Substrat, z.B. einer permeablen Membran, z.B. in Form einer Punktlamination, und anschließende Zuführung eines weiteren, damit zu verklebenden Substrats erfolgen.

Bei dem Substrat, auf das der Schmelzklebstoff appliziert wird, handelt es sich bevorzugt um eine permeable Membran, die wasserdampfdurchlässig ist, d.h. eine atmungsaktive Membran. Beispiele sind Polyurethan-Membranen, PTFE-Membranen, hitzeempfindliche Membranen oder PES-Membranen. Es handelt sich bevorzugt um atmungsaktive Membranen mit mikroskopisch kleinen Poren oder makroskopisch geschlossene Membranen, die funktionelle Gruppen im Kunststoff der Membran enthalten, die den Wasserdampfaustausch ermöglichen.

Bei dem mit der permeablen Membran zu verklebenden Substrat kann es sich z.B. um PTFE-Folien handeln.

Dementsprechend betrifft die Erfindung auch atmungsaktive Textilien umfassend eine permeable Membran, die mit dem erfindungsgemäßen Heissschmelzklebstoff verklebt worden ist.

### Beispiele

Die folgenden Produkte wurden in den Versuchen eingesetzt

| Kürzel | |
|---|---|
| FP | Flüssiges Polyesterpolyol (Tg: -50°C, Mw:5500 g/mol) |
| AP | Amorphes Polyesterpolyol (Tg: 30 °C, Mw:3000 g/mol |
| KP | Kristallines Polyesterpolyol (Smp: 15°C) |
| Kat | 2,2'-Dimorpholinyldiethylether, Katalysator |
| PKS | Pyrogene Kieselsäure, Füllstoff |
| PPG1 | Polypropylenglycol, (Mw:400 g/mol) |
| PPG2 | Polypropylenglycol, (Mw:1000 g/mol) |
| MDI | Diphenylmethan-4,4'-diisocyanat (MDI) |
| Add | Zusätzliche Additive |

Mit den in der nachstehenden Tabelle 1 angegebenen Mengenanteilen wurden Heissschmelzkleber gemäß den Beispielen B1 - B4 und den Vergleichsbeispielen VB1- VB9 gemäß der nachstehend allgemeinen Herstellungsvorschrift hergestellt. Die Mengenanteile sind in Tabelle 1 in Gew.-%, bezogen auf das Gesamtgewicht aller Ausgangskomponenten, angegeben. Selbstverständlich wurde die jeweilige Zugabe bzw. der jeweilige Schritt nicht ausgeführt, wenn die entsprechende Komponente für die Herstellung in dem betreffenden Versuch nicht eingesetzt wurde. In den Versuchen wurde insbesondere der Einfluss von Katalysatormenge, Umsetzungsverhältnis, Füllstoffmenge, Art der verschiedenen Polyole und des Polypropylenglycols untersucht. In der Tabelle 1 ist auch das NCO/OH-Verhältnis für die Ausgangsformulierung angeführt (NCO/OH).

### Allgemeine Herstellungsvorschrift

| Prozesssch ritte | Beschreibung |
|---|---|
| Aufschmelzen der Rohstoffe in 2 Schritten | |
| 1. Vorprodukt | Polypropylenglykol (PPG1 oder PPG2) Füllstoff (PKS) Rohstoffe in Dose füllen und mischen bei 140°C, Kontrolle der Homogenität |
| | |
| 2. Polyolmischung | Polyesterpolyole (FP + AP + KP) Rohstoffe in Dose füllen und mischen bei 140°C, Kontrolle der Homogenität |
| Trocknung der Rohstoffe (Vorprodukt und Polyolmischung) | 1 Stunde unter Vakuum bei 140°C mischen |
| Prepolymer Produktion | Vorlage des Vorproduktes |
| | Zugabe von MDI |
| | 10 Minuten unter Vakuum bei 140°C mischen |
| | Zugabe der Polyolmischung |
| | 1 Stunde bei 140°C unter Vakuum mischen |
| Katalysator | Zugabe Kat 15 Minuten bei 140°C unter Vakuum mischen |
| Abfüllung des Klebstoffes | Abfüllen in Tuben |

Zusätzliche Additive (Add), sofern eingesetzt, können mit dem Katalysator (im letzten Produktionsschritt) zugegeben werden.

Die erhaltenen Heissschmelzkleber wurden mit den folgenden Messmethoden auf Viskosität (Visko), Atmungsaktivität (WDD), Durchhärtung (DH) und Anfangsfestigkeit (Peel) geprüft. Diese erhaltenen Ergebnisse sind ebenfalls in Tabelle 1 wiedergegeben.

### Viskosität (Brookfield, Spindel 27, bei 70°C)

Der Klebstoff wird in einer verschlossenen Tube für 20min bei 140°C im Wärmeschrank aufgeschmolzen. 12,3mg Klebstoff werden in eine Einweghülse abgewogen und 20min im Viskosimeter auf 70°C temperiert, die Messung der Viskosität erfolgt bei 5 UpM, notiert wird der Wert, der sich nach 5min Messung einstellt (Spindel Nr.27, Brookfield Viskosimeter)

### Atmungsaktivität (ASTM E96-E96M)

Probentyp 1: Der Klebstoff wird bei einer Viskosität von 20000 mPa*s in ein 25µ Rakel gefüllt; es wird ein Klebstofffilm auf getrocknetem Silikonpapier aufgezogen und bei Raumtemperatur bis zur Durchhärtung gelagert. Probentyp 2: Klebstoff-Membranverbund, Herstellung über eine Gravurwalze, Applikationstemperatur bei einer Viskosität von 10000 mPa*s; Muster wird bei Raumtemperatur bis zur Durchhärtung gelagert.
- Gläser (Abmaße: Durchmesser: 5 cm, Höhe 5cm), Deckelöffnung: mindestens 3000mm²
- Gläser mit destilliertem Wasser füllen; Füllhöhe 19 mm unter der Probe
- Probenabmaße: max. 10% größer als Deckelöffnung
- Probe über das Glas spannen und verschrauben
- Glas wiegen
- Glas auf die Heizplatte stellen bei 35 °C für 24h -> anschließend 1 h klimatisieren lassen und erneut wiegen
- Die Differenz der Messung ist ein Maß für die Wasserdampfdurchlässigkeit (WDD) in g/m2 24h

### Durchhärtungsgeschwindigkeit

Der Klebstoff wird in einer verschlossenen Tube für 20 min bei 140°C im Wärmeschrank aufgeschmolzen. Der Klebstoff wird auf einer 150°C heißen Heizplatte in ein 500µ Rakel gefüllt; es wird ein Klebstofffilm auf getrocknetem Silikonpapier aufgezogen (Länge ca. 30cm). Der Film wird bei 55% Luftfeuchtigkeit in einen Klimakasten bei Raumtemperatur gelagert. In regelmäßigen Abständen wird ein Teil des Klebstofffilmes auf die Heizplatte gelegt. Wenn kein Aufschmelzen mehr zu beobachten ist, dann ist der Klebstoff ausgehärtet, diese Zeit wird als Durchhärtung notiert.

### Anfangsfestigkeit (Peel Test)

- Der Klebstoff wird in einer verschlossenen Tube für 10min bei 70°C (Applikationstemperatur) im Wärmeschrank aufgeschmolzen
- Es werden 2 PET-Folien vorbereitet (Abmaß: 7 cm breit; 17 cm lang)
- Der Klebstoff wird in ein 25µm Rakel gefüllt, und auf einer PET-Folie appliziert (Klebstofffläche beträgt 5cm x 15 cm), die 2cm, die verbleiben werden zur Aufhängung genutzt
- Die zweite PET-Folien wird aufgelegt und mittel einer Handrolle fixiert (leichtes 3-maliges Hin- und Herrollen)
- Es werden 2 Probekörper hergestellt - der eine wird sofort nach der Verklebung gemessen, der andere nach 1 Min
- Die PET-Folie, auf der der Klebstoff aufgetragen wurde, wird fixiert, an die andere PET-Folie wird ein Gewicht gehangen (20g)
- Die Messung ist nach 5 Minuten beendet, anschließend wird das Gewicht entfernt
- Gemessen wird die Ablauflänge der zweiten PET-Folien in cm
- Mit der zweiten Probe wird identisch verfahren

**Tabelle 1**

| | | | Katalysator | | | Umsetzungsverhältnis | | Füllstoff | | Amorphe Polyolanteile erhöht | | PPG | |
|---|---|---|---|---|---|---|---|---|---|---|---|---|---|
| | VB1 | B1 | VB2 | B2 | VB3 | VB4 | B3 | B4 | VB5 | VB6 | VB7 | VB8 | VB9 |
| Visko [mPas] | 21700 | 11300 | 13100 | 15000 | / | 31600 | 14800 | 8300 | 22600 | 18600 | 19600 | 10100 | 3000 |
| WDD [g/m2 pro 24h] | 400 | 1700-2300 | 400 | 1300 | / | 600-900 | 800-1500 | 650 | 1800 | 600-1500 | 1300-2700 | 800-1100 | 800 |
| DH [h] | 8 | 2,5 | 8 | 3 | / | 2 | 2,5 | 4 | 2 | 2,5 | 2,5 | 3 | 2 |
| Peel [cm] | | | | | | | | | | | | | |
| Sofort | 8-9,5 | 7,6-7,8 | 6,5 | 7,8 | / | 2 | 6-7,8 | 7,1 | 8 | 1,6 | 2,2 | k.a. | k.a. |
| 1min | 7,5 | 7,6-7,8 | 6,5 | 7,4 | | 2 | 5,5-7,5 | 8,1 | 7,5 | 1,5 | 2 | k.a. | k.a. |
| Bestandteil | [%] | [%] | [%] | [%] | [%] | [%] | [%] | [%] | [%] | [%] | [%] | [%] | [%] |
| FP | 29,68 | 16,49 | 16,51 | 15,72 | 15,95 | 17,54 | 17 | 16,44 | 16,18 | 16,51 | 16,66 | 19,61 | 16,84 |
| AP | 15,67 | 8,88 | 8,90 | 8,17 | 8,59 | 9,44 | 9,15 | 8,85 | 8,71 | 17,78 | 17,94 | 10,56 | 9,07 |
| KP | 37,10 | 17,76 | 17,78 | 17,60 | 17,17 | 18,89 | 18,31 | 17,75 | 17,43 | 8,89 | 8,97 | 21,12 | 18,12 |
| Kat | 0,02 | 0,10 | 0,01 | 0,11 | 0,31 | 0,11 | 0,10 | 0,09 | 0,11 | 0,10 | 0,10 | 0,12 | 0,12 |
| PKS | - | 0,63 | 0,63 | - | 0,61 | 0,67 | 0,65 | 0,32 | 2,49 | - | 0,64 | 0,75 | 0,65 |
| PPG1 | - | 19,67 | 19,68 | 18,86 | 19,01 | 20,91 | 20,27 | 19,86 | 19,30 | 20,32 | 19,87 | - | - |
| PPG2 | - | - | - | - | - | - | - | - | - | - | - | 23,38 | 20,07 |
| MDI | 17,51 | 36,47 | 36,49 | 35,13 | 35,30 | 32,44 | 34,52 | 36,66 | 35,78 | 36,40 | 35,82 | 24,46 | 35,13 |
| Add | 0,02 | - | - | 4,41 | 3,07 | - | - | 0,03 | - | - | - | - | - |
| NCO/OH | 2,39:1 | 2,39:1 | 2,39:1 | 2,39:1 | 2,39:1 | 2,00:1 | 2,20:1 | 2,39:1 | 2,39:1 | 2,39:1 | 2,39:1 | 2,39:1 | 4,00:1 |

| | | | | | | | | | | | | | |
|---|---|---|---|---|---|---|---|---|---|---|---|---|---|
| / = nicht bestimmbar; k.a. = komplett abgelaufen | | | | | | | | | | | | | |

## Patentansprüche

1. Heissschmelzklebstoff, umfassend
ein isocyanatfunktionelles Polyurethan-Polymer erhältlich aus der Umsetzung von a) Polyolen umfassend a1) mindestens ein flüssiges Polyesterpolyol, a2) mindestens ein amorphes Polyesterpolyol, a3) mindestens ein kristallines Polyesterpolyol und a4) mindestens ein Polypropylenglycol und b) mindestens einem Polyisocyanat, und
c) mindestens einen Katalysator,
wobei die Ausgangskomponenten des Heissschmelzklebstoffs, bezogen auf das Gesamtgewicht aller Ausgangskomponenten,
a1) 6 bis 30 Gew.-% des mindestens einen flüssigen Polyesterpolyols,
a2) 3 bis 17 Gew.-% des mindestens eines amorphen Polyesterpolyols,
a3) 6 bis 30 Gew.-% des mindestens einen kristallinen Polyesterpolyols,
a4) 10 bis 30 Gew.-% des mindestens einen Polypropylenglycols,
b) 25 bis 50 Gew.-% des mindestens einen Polyisocyanats und
c) 0,04 bis 0,2 Gew.-% des mindestens einen Katalysators umfassen, wobei die Polyole und das mindestens eine Polyisocyanat in einem solchen Mengenverhältnis vorliegen, dass das molare Verhältnis von NCO-Gruppen zu OH-Gruppen (NCO/OH-Verhältnis) im Bereich von 2,1/1 bis 3/1 liegt.

2. Heissschmelzklebstoff nach Anspruch 1, wobei die Ausgangskomponenten des Heissschmelzklebstoffs, bezogen auf das Gesamtgewicht aller Ausgangskomponenten, ferner
d) 0 bis 2 Gew.-%, bevorzugt 0,4 bis 2 Gew.-%, mindestens eines Füllstoffs, bevorzugt pyrogene Kieselsäure,
umfassen.

3. Heissschmelzklebstoff nach Anspruch 1 oder Anspruch 2, wobei das Polypropylenglycol ein Gewichtsmittel des Molekulargewichts von nicht mehr als 1000 g/mol aufweist.

4. Heissschmelzklebstoff nach irgendeinem der vorhergehenden Ansprüche, wobei der mindestens eine Katalysator ausgewählt ist aus Titanaten, Organozinnverbindungen, Bismutverbindungen und Aminen, wobei ein tertiäres Amin bevorzugt ist.

5. Heissschmelzklebstoff nach irgendeinem der vorhergehenden Ansprüche, wobei der mindestens eine Katalysator ein Morpholin-Derivat, insbesondere 2,2'-Dimorpholinyldiethylether, umfasst oder ist.

6. Heissschmelzklebstoff nach irgendeinem der vorhergehenden Ansprüche, wobei das mindestens eine Polyisocyanat ausgewählt ist aus Diphenylmethandiisocyanat, Toluylendiisocyanat, Isophorondiiso-cyanat und 1,6-Hexamethylendiisocyanat, wobei Diphenylmethandiisocyanat, insbesondere 4,4'-Diphenylmethandiisocyanat, bevorzugt ist.

7. Heissschmelzklebstoff nach irgendeinem der vorhergehenden Ansprüche, wobei bezogen auf die Ausgangskomponenten die Polyole und das mindestens eine Polyisocyanat in einem solchen Mengenverhältnis vorliegen, dass das molare Verhältnis von NCO-Gruppen zu OH-Gruppen (NCO/OH-Verhältnis) im Bereich von 2,15/1 bis 2,7/1, bevorzugt von größer 2,2/1 bis 2,5/1, liegt.

8. Heissschmelzklebstoff nach irgendeinem der vorhergehenden Ansprüche, wobei die Ausgangskomponenten des Heissschmelzklebstoffs, bezogen auf das Gesamtgewicht aller Ausgangskomponenten,
a1) 10 bis 20 Gew.-% des mindestens einen flüssigen Polyesterpolyols,
a2) 6 bis 12 Gew.-% des mindestens eines amorphen Polyesterpolyols,
a3) 10 bis 20 Gew.-% des mindestens einen kristallinen Polyesterpolyols,
a4) 16 bis 25 Gew.-% des mindestens einen Polypropylenglycols,
b) 30 bis 40 Gew.-% des mindestens einen Polyisocyanats
c) 0,06 bis 0,13 Gew.-% des mindestens einen Katalysators und
d) 0 bis 1 Gew.-%, bevorzugt 0,4 bis 1 Gew.-%, mindestens eines Füllstoffs, insbesondere pyrogene Kieselsäure,
umfassen.

9. Heissschmelzklebstoff nach irgendeinem der vorhergehenden Ansprüche, erhältlich durch ein Verfahren umfassend die Umsetzung der Polyole mit dem mindestens einen Polyisocyanat unter Erwärmen, wobei der mindestens eine Katalysator und gegebenenfalls der mindestens eine Füllstoff, insbesondere pyrogene Kieselsäure, unabhängig voneinander vor, während und/oder nach der Umsetzung zugesetzt werden.

10. Verwendung des Heissschmelzklebstoffs nach irgendeinem der Ansprüche 1 bis 9 als Textilklebstoff.

11. Verwendung nach Anspruch 10 zur Verkleben von permeablen Membranen, die bevorzugt wasserdampfdurchlässig sind.

12. Atmungsaktives Textil umfassend eine wasserdampfdurchlässige permeable Membran, die mit einem Heissschmelzklebstoff nach irgendeinem der Ansprüche 1 bis 9 angeklebt ist.
